# EUROPEAN PATENT APPLICATION

(11) **EP 1 968 082 A1**
(43) Date of publication of application: **10.09.2008**
(21) Application number: 06843695.5
(22) Date of filing: 25.12.2006
(51) Int. Cl.: H01G 4/18, H01G 4/30

(54) **PROCESS FOR PRODUCING LAMINATED FILM CAPACITOR**

(30) Priority: 27.12.2005 JP 2005375833
(71) Applicant: Rubycon Corporation, Ina-shi, Nagano-ken 399-4593 (JP)
(72) Inventor: KINOSHITA, Nobuyuki, Ina-shi Nagano 399-4593 (JP); IIZAWA, Kazuyuki, Ina-shi Nagano 399-4593 (JP); TEZUKA, Takenori, Ina-shi Nagano 399-4593 (JP); TOMIMOTO, Shigeya, Ina-shi Nagano 399-4593 (JP); KAKO, Tomonao, Ina-shi Nagano 399-4593 (JP)
(74) Representative: Cohausz & Florack
(86) International application number: PCT/JP2006/326321
(87) International publication number: WO 2007/074918

(57) **Abstract**

The present invention relates to a method for producing a multilayered film capacitor prepared by laminating a dielectric layer and a metallic layer comprising aluminum, **characterized in** comprising a step of treating a capacitor element with a solution containing at least a phosphoric acid compound, especially any one of phosphoric acids, phosphates and phosphoric esters, more specifically an aluminum hydrogenphosphate, or further **characterized in that** the aluminum hydrogenphosphate is aluminum monohydrogenphosphate (Al₂(HPO₄)₃) or aluminum dihydrogenphosphate (Al(H₂PO₄)₃), or further **characterized in** comprising a step of heating the capacitor element after the step of treating the capacitor element with the solution containing aluminum hydrogenphosphate, moreover **characterized in that** the maximum temperature of the surface of the capacitor element, during the step of heating, is from 200°C to 280°C.

## Description

### TECHNICAL FIELD

The present invention relates to a method for producing a multilayered film capacitor in which aluminum is used as the material of an internal electrode, and specifically a method for treating a chip-shaped, especially a polymer multi layer (PML) type capacitor element (thin film polymer multilayered capacitor element) during the production, and more specifically to a method for treating a cut surface after chip cutting.

### BACKGROUND ART

A chip-shaped multilayered film capacitor, including a PML capacitor in which a resin layer is formed by depositing a dielectric material under vacuum and curing the dielectric material is produced by cutting (chip cutting) a laminate prepared by alternately laminating a resin layer serving as a dielectric and a thin metal layer serving as an internal electrode in the form of a capacitor element.

When the resultant laminate is cut into elements, a part of tip of an internal electrode (aluminum) are exposed on cut surfaces through friction or heat during cutting, thereby causing electrical short circuiting, and thus capacitor characteristics are exhibited by electrical treatment. Since the internal electrode (especially aluminum) exposed on the cut surface reacts with moisture in the atmosphere in which the capacitor is used, thereby causing corrosion, which leads to a decrease in the life of the capacitor, something treatment is required.

In a conventional multilayered film capacitor, prevention of short circuiting and inhibition of hydration of electrodes are carried out by subjecting the exposed internal electrode to a treatment of a sodium hydroxide (NaOH) aqueous solution or a potassium hydroxide (KOH) aqueous solution. Epoxy resin is also coated so as to shield the whole capacitor element from the air. However, such a technique merely increases the distance between moisture and metal and there arise problems such as a reduction in size of the chip-shaped multilayered film capacitor is lost or the effect is insufficient.

In the case of the conventional chip-shaped multilayered film capacitor in which an element is formed by stacking metallized films, a trial was made so as to delay penetration of moisture from the cut surface and to improve insulation by mainly devising cutting conditions during chip cutting. The existing film serving as a dielectric is melted by heat generated during cutting thereby forming a state where the film is mixed with the internal electrode (aluminum) of the cut surface. It is possible to maintain the isolation required of the capacitor by a electrical treatment of the cut surface in that state. However, in a multilayered film capacitor comprising thin layers such as a PML type dielectric, isolation properties are not restored only by a electrical treatment.

In the case of a PML type capacitor element, a technique is disclosed in which the internal electrode (aluminum) exposed on the cut surface is etched with a solution to form a passive film (oxide film), thereby maintains isolation or improving moisture resistance. Several prior art also disclose a method of treating a cut surface of a chip-shaped multilayered film capacitor.

As a typical example of these prior art, there is known a method for producing a multilayered film capacitor, characterized in comprising a step of isolating a metal aluminum electrode layer exposed on a cut surface of an element by forming an oxide film on a surface of each metal aluminum electrode layer through an anodization using an aqueous solution containing an alkali metal compound (Patent Document 1). The patent document describes a combination of alkali metal compounds in which metal species include at least one kind selected from among lithium, sodium, potassium, rubidium, cesium and francium, and anion species constituting a metal salt include at least one kind selected from among hydroxide, oxalate, chromate, nitrate, carbonate and hydrogencarbonate in this method.

An object of this treatment is to prevent short circuiting of a multilayered film capacitor after cutting, thereby obtaining a high-reliability capacitor, which is excellent in impact resistance and shows excellent results in a moisture-resistant load test.

However, the oxide film obtained by this method does not improve the moisture-resistant life of the capacitor and does not sufficiently satisfy the moisture-resistant life of the resultant capacitor.

As another prior art, there is known a multilayered film capacitor comprising a long capacitor base material comprising a capacitor portion prepared by laminating a metallic layer and a dielectric layer, and an external electrode formed in a lamination direction at both ends of the capacitor portion, characterized in that the long capacitor base material is cut perpendicularly to a longitudinal direction, and a method for producing the same (Patent Document 2). With respect to this capacitor, it is disclosed that the constituent components of a non-conductor layer contain constituent elements of a metallic layer or a dielectric layer, a non-conductor film is made of an oxide or a nitride, and the non-conductor film is formed by plasma.

However, since the non-conductor layer obtained by this method is very thin, sufficiently improving isolation and moisture resistance cannot be obtained. Therefore, the resultant capacitor is inadequate or insufficient with regard to initial isolation resistance value (initial IR value), moisture-resistance, and impact resistance, and therefore cannot simultaneously satisfy these characteristics.

Furthermore, as a method of improving a dielectric breakdown strength of a PML capacitor, there is known a method in which an internal electrode metal (aluminum) of a cutting edge portion is removed by etching, or coated with an oxide by anodizing (Patent Document 3). In this method, as a suitable etching treating solution, a basic treatment solution such as a solution of KOH or NaOH and an acidic treatment solution such as a solution of hydrofluoric acid, sulfuric acid or phosphoric acid are disclosed. An aqueous boric acid solution is disclosed as a solution used for anodizing.

Furthermore, this method also discloses that aluminum exposed on a cut surface is etched with a basic solution and then anodized.

However, such a treating method only suppresses (delaying) hydration of an internal electrode by a liquid treatment, as described above, and there arises a problem that anodizing requires an apparatus for applying an electric current to an individual chip-shaped capacitor in an aqueous solution, and is also complicated and requires a long time. The resultant capacitor is inadequate or insufficient in the initial isolation resistance value (initial IR value), moisture-resistance and impact resistance, and cannot simultaneously satisfy these characteristics.

Patent Document 1: Japanese Unexamined Patent Publication (Kokai) No. 2002-231563

Patent Document 2: Japanese Unexamined Patent Publication (Kokai) No. 2005-45094

Patent Document 3: Specification of U.S. Patent No. 5,716,532

### DISCLOSURE OF THE INVENTION

An object of the present invention is to solve the above-described problems of the prior arts and to provide a high-reliability small-sized capacitor, which is excellent in all characteristics such as initial electrical characteristics, initial isolation resistance value (initial IR value), moisture-resistant life characteristics and impact resistance, by a simple and easy treating method without impairing size reduction of a capacitor.

In order to achieve the above object, in a first aspect, the present invention relates to a method for producing a multilayered film capacitor prepared by laminating a dielectric layer and a metallic layer comprising aluminum, characterized in comprising a step of treating a capacitor element with a solution containing at least a phosphoric acid compound.

In a second aspect, the present invention relates to the method for producing a multilayered film capacitor according to the above first aspect, wherein the phosphoric acid compound is any one of phosphoric acids, phosphates and phosphoric esters.

In a third aspect, the present invention relates to the method for producing a multilayered film capacitor according to the above first or second aspect, wherein the phosphoric acid compound is aluminum hydrogenphosphate.

In a fourth aspect, the present invention relates to the method for producing a multilayered film capacitor according to the above third aspect, wherein the aluminum hydrogenphosphate is aluminum monohydrogenphosphate (Al₂(HPO₄)₃) or aluminum dihydrogenphosphate (Al(H₂PO₄)3).

In a fifth aspect, the present invention relates to the method for producing a multilayered film capacitor according to any one of the above first to fourth aspects, which is further characterized in comprising a step of heating the capacitor element after the step of treating the capacitor element with the solution containing the phosphoric acid compound.

In a sixth aspect, the present invention relates to the method for producing a multilayered film capacitor according to the above fifth aspect, wherein the maximum temperature of the surface of the capacitor element, during the step of heating, is from 200°C to 280°C.

In a seventh aspect, the present invention relates to the method for producing a multilayered film capacitor according to any one of the above first to sixth aspects, which is further characterized in comprising a step of treating with an alkali aqueous solution before the step of treating the capacitor element with the solution containing the phosphoric acid compound.

In an eighth aspect, the present invention relates to the method for producing a multilayered film capacitor according to the above seventh aspect, wherein the alkali aqueous solution contains at least one of sodium hydroxide, potassium hydroxide and lithium hydroxide.

In a ninth aspect, the present invention relates to the method for producing a multilayered film capacitor according to any one of the above first to eighth aspects, wherein the dielectric layer is formed by depositing a vaporized monomer or oligomer on substrate under the vacuum and curing the monomer and oligomer.

The present invention has, as the feature of the constitution, a method for producing a multilayered film capacitor prepared by laminating a dielectric layer and a metallic layer comprising aluminum, characterized in comprising a step of treating a capacitor element with a solution containing at least a phosphoric acid compound, especially a solution containing any one of phosphoric acids, phosphates and phosphoric esters, and more specifically a solution containing aluminum hydrogenphosphate. With such a constitution, or the constitution and other constitutions, the following operation and effect can be exerted.

### BRIEF DESCRIPTION OF THE DRAWINGS

Fig. 1 is a schematic view showing a bar-shaped unit element (strip) A.
Fig. 2 is a schematic view showing a chip-shaped multilayered film capacitor element B.
Fig. 3 is a partially enlarged cross sectional view taken along the line b-b of a capacitor element B after treating with an aluminum hydrogenphosphate solution.
Fig. 4 is a manufacturing process flow chart of a PML capacitor.
Fig. 5 is graph 1 showing the results of a moisture-resistant load test (40°C, 95% RH-25 VDC) according to Examples 1 to 3.
Fig. 6 is graph 2 showing the results of a moisture-resistant load test (40°C, 95% RH-25 VDC) according to Example 1 and Comparative Examples 1 to 4.
Fig. 7 is graph 3 showing the measurement results of FT-IR.

### DETAILED DESCRIPTION OF THE INVENTION

As described above, according to the present invention, a film made of aluminum containing phosphoric acid can be formed on a surface of a capacitor element, especially a surface of aluminum of a cut surface without impairing a capacitor function by comprising a step of treating a capacitor element with a solution containing at least a phosphoric acid compound, specifically a solution containing any one of phosphoric acids, phosphates and phosphoric esters, and more specifically a solution containing aluminum hydrogenphosphate. It is necessary to further comprise a heating step after treating the capacitor element with the solution containing the phosphoric acid compound, especially a heat treatment performed so that the temperature of a surface of the element reaches the temperature of 100°C to 280°C, preferably 200°C to 250°C, and more preferably 200°C to 220°C for about 30 seconds to 30 minutes so as to obtain a satisfactory film. A heat treatment at high temperature where the temperature of a surface of an element is higher than 280°C, or a heat treatment for a long time of more than 15 minutes even at a temperature of about 200°C may exert an adverse influence on a resin layer as a dielectric. It is preferred that a heat treatment is efficiently performed at a temperature where the temperature of a surface of an element is from about 200°C to 220°C for a short time, for example, 30 seconds to 15 minutes, preferably 30 seconds to 5 minutes, and more preferably 30 seconds to 3 minutes. A heat treatment at low temperature of lower than 100°C requires a long time including a drying time, and a film made of aluminum containing phosphoric acid, which is excellent in hydration resistance, is not sufficiently formed and thus improvement in moisture resistance of the capacitor cannot be expected.

It is preferable that the heat treatment be performed so that the temperature of a surface of an element reaches a high temperature of 200°C or higher, after treating with an aqueous aluminum hydrogenphosphate. This is because a conventional aluminum phosphate as a hydrate salt must be removed so as to form an aluminum phosphate film, which is effective for moisture resistance.

Furthermore, when the internal electrode (aluminum) is treated with a solution containing aluminum hydrogenphosphate, since the treating solution contains aluminum, dissolution of aluminum can be suppressed as compared with the treatment with a phosphoric acid solution containing no aluminum, and also a dense film can be obtained and an adverse influence on characteristics of the capacitor due to excessive dissolution of the internal electrode (aluminum) can be reduced. This constitution is required to achieve the object of the present invention, which is to solve the above-described problems of the prior arts and to provide a high-reliability small-sized capacitor, which is excellent in all characteristics such as initial electrical characteristics, initial insulation resistance value (initial IR value), moisture-resistant life characteristics and impact resistance, by a simple and easy treating method without impairing size reduction of a capacitor.

Specifically, a PML type capacitor formed by depositing a dielectric under vacuum and curing the dielectric can drastically reduce the thickness of a dielectric layer (1 µm or less). In that case, since the distance between internal electrodes (aluminum) in a cut surface decreases, a problem such as arc discharge easily arises during application of voltage. Therefore, in the present invention, in order to improve isolation resistance of a capacitor to obtain a high-reliability capacitor, a capacitor having more excellent characteristics can be obtained by etching aluminum exposed on a cut surface with an alkali aqueous solution, thereby increasing the coast distance between internal electrodes before a step of treating a cut surface of a chip-shaped multilayered film capacitor with an aqueous solution containing aluminum hydrogenphosphate. In this case, the solution used for etching includes a sodium hydroxide aqueous solution, a potassium hydroxide aqueous solution and a lithium hydroxide aqueous solution. In such a treatment, since aluminum has high solubility, it becomes possible to perform a quick treatment. When a large amount of an alkali component remains as a residue because of insufficient washing with water after the treatment, the alkali component reacts with moisture during actual use of the capacitor, thereby corroding aluminum and exerting an adverse influence on life and characteristics of the capacitor. However, by treating with an aluminum hydrogen phosphate aqueous solution after the etching treatment, a film of aluminum containing phosphoric acid as a stabilized film can be formed on a surface of an internal electrode (aluminum) etched from a cut surface. In this case, when an acid aluminum hydrogenphosphate aqueous solution is used, the effect of neutralizing a corrosive component remaining in the element as a result of an alkali treatment can also be obtained.

The liquid temperature of the aqueous solution containing aluminum hydrogenphosphate used in the treatment is from room temperature to 80°C, preferably from 30°C to 70°C, and more preferably from 40 to 60°C, in view of the effect. When the liquid temperature is higher than 80°C, since an adverse influence such as excessive dissolution of metal (aluminum) of the internal electrode is exerted on the capacitor element, it is not preferred as the treating condition. In contrast, when the liquid temperature is too lower than room temperature (25°C), the reaction rate decreases (decrease of the reaction rate due to dull migration of ions) and the treatment requires a long time, and thus a highly stable film having hydration resistance cannot be efficiently obtained.

The concentration of the treating solution is from 3 to 50% by weight, preferably from 5 to 30% by weight, and more preferably from 5 to 20% by weight. When the concentration is too high, since metal (aluminum) of the internal electrode is excessively dissolved and the residue concentration is high even when washed after the treatment, there arises a problem that the washing time increases. Insufficient washing is not preferred because it causes corrosion of the electrode. When the concentration is lower than 3% by weight, a film of aluminum containing a sufficient amount of phosphoric acid cannot be formed. In the treatment with the solution containing aluminum hydrogenphosphate, when the internal electrode layer is made of aluminum, adhesion between the film and the metallic layer is very good and an especially large effect of improving moisture resistance is exerted.

In the PML type multilayered film capacitor of the present invention, a usable resin is preferably a vinyl-based resin or an acrylic resin in view of ease of production and characteristics of the capacitor. Specific examples of the monomer constituting the resin include 1,6-hexanediol diacrylate and tricyclodecanedimethanol diacrylate.

In the present invention, a metal usable as the internal electrode is aluminum.

### BEST MODE FOR CARRYING OUT THE INVENTION

For easier understanding of technical features of the present invention, preferred aspects of the present invention will be described below while optionally comparing examples with comparative examples. It is to be understood that the following examples are for only illustrating several aspects of the present invention and do not define the technical scope of the present invention.

### EXAMPLES

### Production Example of PML Capacitor

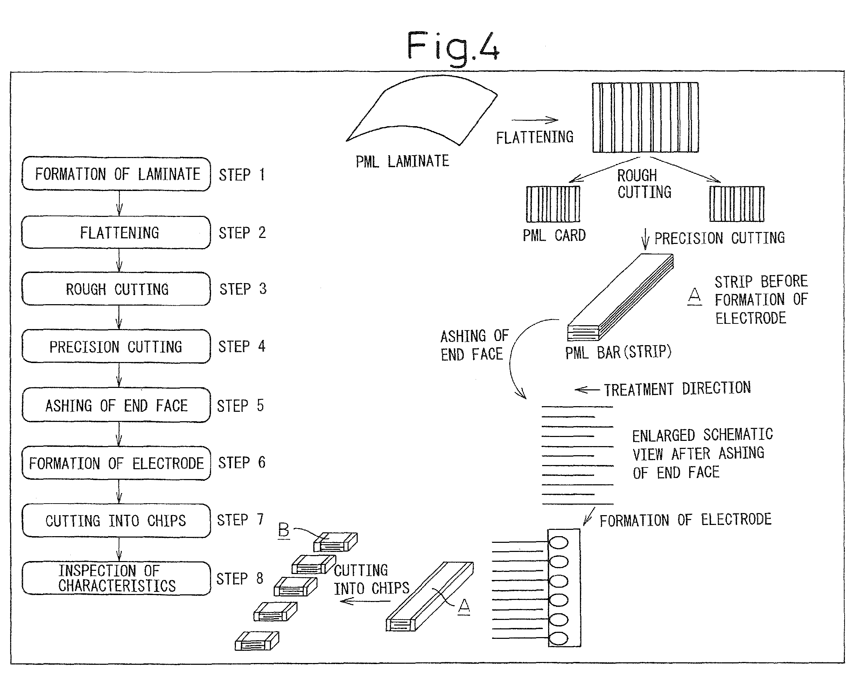

An aspect of the method for producing a PML capacitor of the present invention with reference to the accompanying drawings, especially Fig. 4, will be explained.

In a laminate forming step 1, a laminate is formed. A monomer (acrylic) vaporized in an evaporator was directly deposited on a surface of rotary drum was cooled in a vacuum chamber. Subsequently, a resin thin film deposited on the drum was cured by irradiating with an electron beam from an electron beam irradiation apparatus located in a rotary direction of the drum. This operation was repeated to form a 4 µm thick lower protective layer 1 made of only a resin on a surface of the drum.

Next, an aluminum thin film layer having a thickness of 250 to 300 angstroms serving as an internal electrode was formed on the lower protective layer 1 made of the resin by deposition. A monomer (acrylic) was deposited on an internal electrode layer 2 and then cured to form a dielectric layer 3 having a thickness of 0.4 µm. In the same manner, an element layer was laminated so as to obtain a capacitor by alternately laminating the internal electrode layer 2 and the dielectric layer 3 one after another. Aluminum was deposited from a metal vaporization source while forming an electrical isolating portion on a dielectric layer every one rotation of the drum by a patterning method using oil to form an internal electrode layer. In such a manner, the resin thin film and aluminum (each 4700 layers) were laminated continuously alternately to form a 4 µm thick upper protective layer 1' made of only a resin on a surface of an element layer, and thus a tabular laminate having a total thickness of about 2.0 mm was obtained.

1,6-hexanediol diacrylate was used as an acrylic resin.

In the following flattening step 2, the resultant tabular laminate was cut through in an axial direction of the drum, removed from drum and then hot-pressed so as to remove curvature to obtain a tabular laminate unit element.

In a rough cutting step 3, a tabular laminate unit element was cut into a precision-cuttable size.

In the following precision cutting step 4, the coarse-cut laminate unit element was cut in parallel to a patterning direction to obtain a bar-shaped unit element (strip) A having a width of 5.5 mm.

In an end face plasma treatment (ashing of end face) 5, a corresponding cut end face of the strip A was treated with plasma containing oxygen so as to enable connection of an external electrode, and then the resin layer (dielectric layer) 3 was selectively removed thereby exposing an aluminum layer constituting the internal electrode layer 2 from the cut surface.

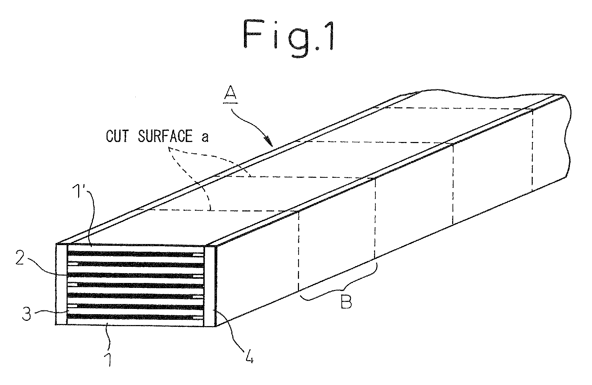

Next, in an electrode forming step 6, a metallic layer was further formed by sputtering to form an external electrode 4. A conductive paste prepared by dispersing a copper powder in a thermocurable phenol resin was applied on the sputtering layer and cured with heating, and then a surface of the resin was tin-plated by electrolysis. The bar-shaped unit element (strip) A with the external electrode 4 formed thereon is shown in Fig. 1.

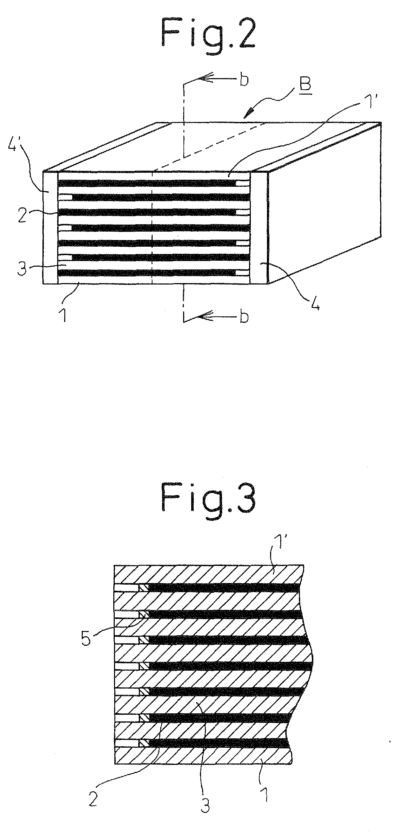

Next, in a step of cutting into chips 7, this strip A was cut at a cut line "a" in Fig. 1 to obtain a chip-shaped multilayered film capacitor B as shown in Fig. 2. The resultant capacitor had a size measuring 5.7 mm x 5.0 m x 2.1 mm. The chip-shaped multilayered film capacitor B thus obtained was subjected to the following treatments.

### Example 1

Furthermore, the resultant chip-shaped multilayered film capacitor B was dipped in a 10% by weight aluminum dihydrogenphosphate (Al (H₂PO₄) ₃) aqueous solution at 50°C for 5 minutes. After washing with pure water, the chip-shaped multilayered film capacitor was subjected to a heat treatment so that the time during which the element temperature reaches 200°C or higher is at least one minute.

Isolation recovery was performed by an electrical treatment to obtain a chip-shaped multilayered film capacitor having normal characteristics. Characteristics of the resultant capacitor were examined.

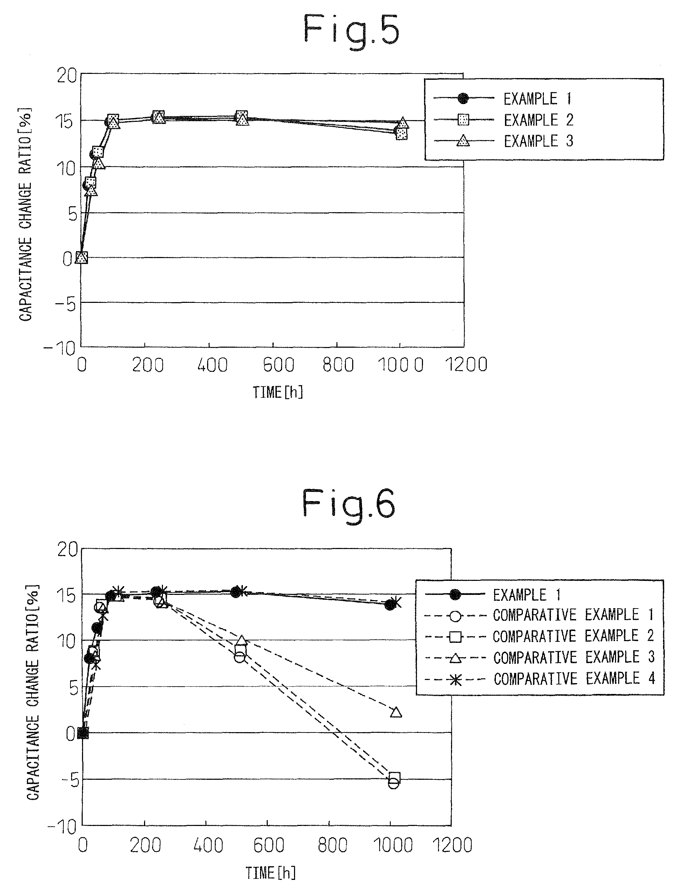

The measurement results are shown in Figs. 5 to 7, together with characteristic values of capacitors obtained by the following examples and comparative

### examples.

### Example 2

The chip-shaped multilayered film capacitor obtained by the above method for producing a capacitor was dipped in a 10% by weight aluminum monohydrogenphosphate (Al₂(HPO₄)₃) aqueous solution at 50°C for 5 minutes. A chip-shaped multilayered film capacitor having normal characteristics was obtained by the same treating method as in Example 1, with the above exception.

### Example 3

The chip-shaped multilayered film capacitor obtained by the above method for producing a capacitor was dipped in a 5% by weight sodium hydroxide aqueous solution at 25°C for 5 minutes, washed with running water and then dipped in a 10% by weight aluminum dihydrogenphosphate (Al (H₂PO₄) ₃) aqueous solution at 50°C for 5 minutes. A chip-shaped multilayered film capacitor having normal characteristics was obtained by the same treating method as in Example 1, with the above exception.

### Comparative Example 1

A chip-shaped multilayered film capacitor was obtained by only performing a heat treatment and a electrical treatment without dipping the chip-shaped multilayered film capacitor obtained by the above method for producing a capacitor in an aqueous aluminum hydrogenphosphate solution. Namely, a treatment for dipping in the aqueous aluminum dihydrogenphosphate was removed from Example 1.

### Comparative Example 2

The chip-shaped multilayered film capacitor obtained by the above method for producing a capacitor was dipped in a 5% by weight sodium hydroxide aqueous solution at 25°C for 5 minutes, washed with running water and after a heat treatment, the treated capacitor was subjected to an electrical treatment to obtain a chip-shaped multilayered film capacitor. Namely, a treatment for dipping in the aqueous aluminum dihydrogenphosphate was removed from Example 3.

### Comparative Example 3

The chip-shaped multilayered film capacitor obtained by the above method for producing a capacitor was dipped in an aqueous solution prepared by dissolving lithium nitrate LiNO₃ (5 mM) and sodium hydrogencarbonate NaHCO₃ (5 mM) in pure water at 80°C for 30 minutes as means for forming an oxide film on a cut surface of a conventional method. Then, a heat treatment and an electrical treatment were performed to obtain a chip-shaped multilayered film capacitor. Namely, an aqueous solution prepared containing lithium sulfate and sodium hydrogencarbonate dissolved therein was used in place of the aqueous aluminum dihydrogenphosphate of Example 1.

### Comparative Example 4

An ultraviolet-curable resin was applied on the chip-shaped multilayered film capacitor obtained by the above method for producing a capacitor using a roller and then cured by irradiation with ultraviolet light. The resultant ultraviolet-curable resin film had a thickness of about 0.1 mm. Then, a heat treatment and a electrical treatment were performed to obtain a chip-shaped multilayered film capacitor.

Initial characteristics of the capacitors thus obtained in Examples 1 to 3 and Comparative Examples 1 to 4 are shown in Table 1. A difference in initial characteristics (capacitance tan δ and ESR) was not easily recognized under any conditions and the treating method did not exert an adverse influence on characteristics of the capacitor. These results revealed that both a treatment for dipping in an aluminum monohydrogenphosphate aqueous solution and an aluminum dihydrogenphosphate aqueous solution and a treatment for dipping in a sodium hydroxide aqueous solution do not exert an adverse influence on initial characteristics of the capacitor.

With respect to the IR (isolation resistance) value, it was found that IR is improved by a treatment with an aqueous aluminum hydrogenphosphate solution when the capacitors of Examples 1 and 2 are compared with the capacitor of Comparative Example 1, which is why a film of aluminum containing phosphoric acid on a cut surface was formed.

The capacitor of Comparative Example 2 treated with only an aqueous sodium hydroxide solution showed a comparatively large IR value, which is why an aluminum electrode layer exposed on a cut surface was etched and thus a given distance of the aluminum electrode layer was removed in a direction of the inside of the element. The IR value can be improved more by using the treatment with a sodium hydroxide aqueous solution in combination with a treatment with an aqueous aluminum hydrogenphosphate (Example 3).

In the capacitor of Comparative Example 4 in which the resin was applied on the cut surface, the surface of the element cut surface was slightly damaged when the resin is directly applied, and thus IR sometimes deteriorated drastically. As the thickness of one layer of the resin dielectric layer decreases, the proportion of damage increases. As the area of the element cut face decreases, it becomes more difficult to apply the resin on the surface uniformly and thinly.

**Table 1**

| | Capacity [µF at 1 kHz] | tan δ [% at 1 kHz] | ESR [mΩ at 100 kHz] | IR [MΩ at 25 V] |
|---|---|---|---|---|
| Example 1 Al(H₂PO₄)₃ | 8.3 | 1.0 | 9.6 | 380 |
| Example 2 Al₂(HPO₄)₃ | 8.2 | 1.0 | 9.8 | 370 |
| Example 3 NaOH → Al(H₂PO₄)₃ | 8.1 | 1.1 | 9.7 | 950 |
| Comparative Example 1 Not treated | 8.3 | 1.1 | 9.6 | 160 |
| Comparative Example 2 Only NaOH | 8.1 | 1.2 | 9.8 | 710 |
| Comparative Example 3 LiNO₃ + NaHCO₃ | 8.2 | 1.2 | 9.7 | 340 |
| Comparative Example 4 Coated with resin | 8.3 | 1.1 | 9.6 | 430 |

The capacitors thus obtained in Examples 1 to 3 and Comparative Examples 1 to 4 were reflown mounted on a substrate and then a moisture-resistant load test at 40°C and 95% RH was performed. With respect to the applied voltage, 25 VDC was applied.

The test results of Examples 1 to 3 are shown in Fig. 5.

The initial about 15% increase in capacitance is caused by water absorption. In all capacitors, a decrease in capacitance is scarcely observed even after a lapse of 1,000 hours and the capacitors showed good moisture-resistant life characteristics. The results revealed that a difference is scarcely observed when the capacitors of Examples 1 and 2 are compared and a difference in the effect of improving moisture-resistant life characteristics is scarcely observed between the case when the aluminum monohydrogenphosphate aqueous solution is used as the treating solution and the case when the aluminum dihydrogenphosphate aqueous solution is used as the treating solution. The capacitor of Example 3 treated with the sodium hydroxide aqueous solution before the treatment for dipping in the aluminum monohydrogenphosphate aqueous solution showed a small decrease in capacity as compared with the capacitors of Examples 1 and 2, and showed excellent moisture-resistant life characteristics. The reason is considered that the internal electrode (aluminum) exposed on the cut surface makes a backward movement as a result of etching with the sodium hydroxide aqueous solution and also a phosphoric acid film is formed thereon, and thus moisture resistance is more improved.

Next, the test results of Example 1 and Comparative Examples 1 to 4 are shown in Fig. 6.

The results of a comparison between the capacitor of Example 1 in which the treatment for dipping in the aqueous aluminum dihydrogenphosphate was performed and the capacitor of Comparative Example 1 in which no treatment was performed revealed that the capacitor of Example 1 is apparently excellent in moisture-resistant life characteristics. The reason is considered that a film of aluminum containing phosphoric acid was formed on the surface of the aluminum internal electrode layer exposed on the surface of the element, especially the cut surface. This film is a film which is stable in atmosphere and is also excellent in hydration resistance. It is considered that the capacitance of the element of Comparative Example 1 decreased because the hydration reaction of moisture penetrated into the element and aluminum of the electrode layer arose.

In the capacitor of Comparative Example 2 in which only the treatment with the sodium hydroxide aqueous solution was performed, an improvement in moisture-resistant life characteristics was scarcely recognized.

In the capacitor of Comparative Example 3 in which the treatment for dipping in the aqueous solution containing lithium nitrate LiNO₃ and sodium hydrogencarbonate NaHCO₃ dissolved therein was performed, an improvement in moisture-resistant life characteristics was recognized, but the effect was inferior as compared with the capacitor of Example 1 treated with the aluminum dihydrogenphosphate solution.

The capacitor of Comparative Example 4 in which the ultraviolet-curable resin was applied on the cut surface showed moisture-resistant life characteristics which are equivalent to those of Example 1. However, the resin film had a large thickness of about 0.1 mm and, when the thickness of the applied resin to the size of the element relatively increases, there arise problems such as poor mounting to a substrate and peeling of the formed resin film. Also, the merit of size reduction of the multilayered film capacitor is impaired.

Next, impact resistance was examined using a parts feeder. The elements (each 100 elements) of Examples 1 to 3 and Comparative Examples 1 to 4 were placed in a parts feeder at a frequency of 60 Hz and the IR value of the carried elements was examined. An element having an IR value of 1 MΩ or less was rated "Poor" and the number is shown in Table 2.

**Table 2**

| | Number of elements with poor IR (per 100 elements) |
|---|---|
| Example 1 Al (H₂PO₄)₃ | 0 |
| Example 2 Al₂(HPO₄)₃ | 0 |
| Example 3 NaOH → Al (H₂PO₄)₃ | 0 |
| Comparative Example 1 Not treated | 8 |
| Comparative Example 2 Only NaOH | 4 |
| Comparative Example 3 LiNO₃ + NaHCO₃ | 0 |
| Comparative Example 4 Coated with resin | 4 |

In Examples 1 to 3, there was no element having an IR value of 1 MΩ or less. The reason is considered that a stable film of aluminum containing phosphoric acid is formed on the surface of the cut surface and adhesion to the element is excellent and thus insulation properties are maintained in Examples 1 to 3. In Comparative Example 3 in which the oxide film was formed on the cut surface, there was no element with poor IR.

In Comparative Examples 1, 2 and 4, there were 4 to 8 elements with poor IR among the 100 elements.

This reason is considered that, since no film was formed on the surface of the cut surface, the cut surface of the element was damaged to cause poor IR in Comparative Examples 1 and 2.

In Comparative Example 4, while the resin film was formed on the cut surface, the resin film was peeled when impact was applied to the element by the parts feeder. The reason is considered that the exposed cut surface was damaged to cause poor IR.

The above results of examples and comparative examples are summarized in Table 3.

**Table 3.**

| | Initial electrical characteristics | Initial IR | Moisture-resistant life characteristics | Impact resistance |
|---|---|---|---|---|
| Example 1 Al (H₂PO₄)3 | Excellent | Good | Excellent | Excellent |
| Example 2 Al₂ (HPO₄)₃ | Excellent | Good | Excellent | Excellent |
| Example 3 NaOH → Al (H₂PO₄) ₃ | Excellent | Excellent | Excellent | Excellent |
| Comparative Example 1 Not treated | Excellent | Insufficient | Defective | Defective |
| Comparative Example 2 Only NaOH | Excellent | Excellent | Defective | Insufficient |
| Comparative Example 3 LiNO₃ + NaHCO₃ | Excellent | Good | Insufficient | Excellent |
| Comparative Example 4 Coated with resin | Excellent | Good | Excellent | Insufficient |

With respect to initial IR, an element having an initial IR of 501 MΩ was rated "Excellent", an element having an initial IR of 500 to 201 MΩ was rated "Good", an element having an initial IR of 200 to 101 MΩ was rated "Insufficient", and an element having an initial IR of 100 MΩ or less was rated "Defective", respectively.

With respect to moisture-resistant life characteristics, an element having a capacitance change, measured after application of 25 V at 40°C and 95% RH followed by a lapse of 1,000 hours, of +10% or more was rated "Excellent", an element having a capacity change of +9 to +5% was rated "Good", an element having a capacity change of +5 to 0% was rated "Insufficient", and an element having a capacity change of -1% or less was rated "Defective", respectively.

With respect to impact resistance, 0 elements with poor IR in the above test using the parts feeder was rated "Excellent", 1 to 3 elements with poor IR was rated "Good", 4 to 6 elements with poor IR was rated "Insufficient", and 7 or more elements with poor IR was rated "Defective", respectively.

As is apparent from the results shown in Table 3, the capacitors of Examples 1 to 3 treated with the aluminum hydrogenphosphate aqueous solution exhibited excellent results in any item and reliability (IR) can be further improved by treating the element with an alkali aqueous solution.

The treatment with the aluminum hydrogenphosphate aqueous solution is especially characterized in exerting a large effect of improving moisture-resistant life characteristics. It is considered that moisture-resistant life characteristics of the capacitors of Examples 1 to 3 were improved in the following manner. That is, an aluminum film containing phosphoric acid, which is effective for moisture resistance, is formed on a surface of the capacitor by the treatment with the aluminum hydrogenphosphate aqueous solution and the following heat treatment and such a film is especially formed on the exposed surface of aluminum as the internal electrode of the cut surface as shown in Fig 3, and thus moisture-resistant life characteristics were improved. Fig. 3 shows the cut surface of the capacitor of Example 3 in which the treatment with the sodium hydroxide was also performed.

In contrast, when the treatment with the aluminum hydrogenphosphate aqueous solution was not performed, like Comparative Examples 1 and 2, it is believed that while a light thermal oxide film was formed by a heat treatment on a surface of the internal electrode (aluminum) exposed on the cut surface, this film is very thin, and thus sufficient effect of delaying hydration is not exerted and an aluminum metallic layer was gradually hydrated, which leads to a decrease in life. In the capacitor of Comparative Example 3 in which an oxide film was formed by the solution, the effect of improving moisture-resistant life characteristics was exerted. However, a more excellent effect was exerted in the case of the capacitors of Examples 1 and 2 in which a film of aluminum containing phosphoric acid was formed.

The effect of improving moisture-resistant life characteristics of Examples 1 to 3 was excellent and the same as in the capacitor of Comparative Example 4 in which a conventional cut surface is coated with the resin. In the case of the capacitor of Comparative Example 4, since a resin film having the thickness of 0.1 mm is formed on a surface of the capacitor, as the size of the element to size reduction, which is a merit of the chip-shaped multilayered film capacitor, decreases, the merit is impaired. Furthermore, a problem such as peeling caused by poor adhesion between the resin film and the element, and a problem such as poor mounting may arise, and the capacitor lacks reliability.

Examples 1 to 3 show good results to deterioration of IR due to impact from the outside, which is why a film of aluminum containing phosphoric acid is formed on a surface of the element.

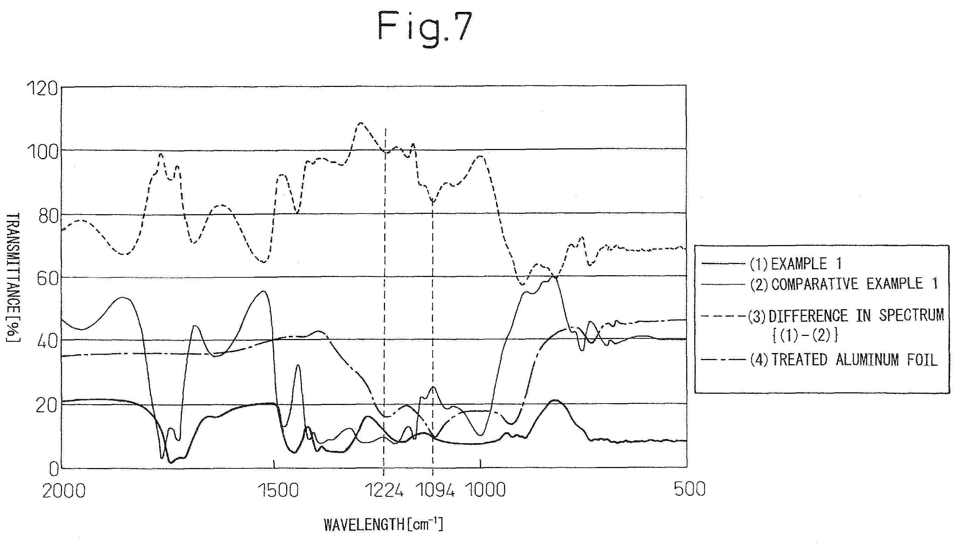

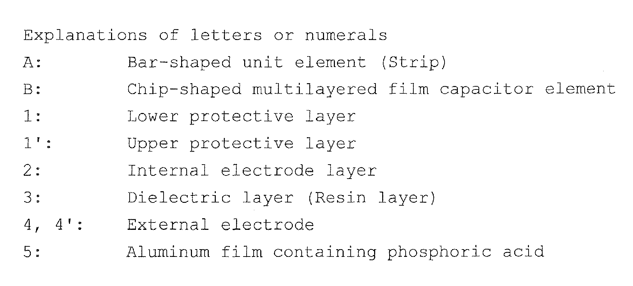

The results obtained actually by analyzing a cut surface of the multilayered film capacitor elements of Example 1 and Comparative Example 1 using FT-IR are shown in Fig. 7 (see Fig. 7). In Fig. 7, four kinds of charts, for example, charts of (1) a cut surface of the element of Example 1, (2) a cut surface of the element of Comparative Example 1, (3) a difference in spectrum of a FT-IR chart of (1) - (2), and (4) those obtained by applying an aluminum dihydrogenphosphate aqueous solution on aluminum and heating the solution at 200°C are shown. It is considered that 1094 cm⁻¹ and 1224 cm⁻¹ of chart (4) show a characteristic peak of a phosphoric acid film (AlPO₄) formed on aluminum.

From a difference in spectrum (3) obtained by subtracting the chart of Comparative Example 1 from that of Example 1, a characteristic peak of AlPO₄ is observed at 1094 cm⁻¹ and 1224 cm⁻¹. This shows that the characteristic peak of the phosphoric acid film on aluminum was detected in Example 1 and the peak was not detected in Comparative Example 1, i.e., it suggests that an AlPO₄ film was formed by the treatment with the aluminum dihydrogenphosphate aqueous solution and it is possible to support that this film contributes to an improvement in characteristics of the capacitor in moisture resistance, IR and impact resistance of the capacitors of Examples 1 to 3.

Furthermore, when the treatment with the alkali aqueous solution is performed before the treatment with the aluminum hydrogenphosphate aqueous solution, since a part of the internal electrode (aluminum) formed during cutting and the internal electrode exposed on the cut surface are etched and aluminum makes a backward movement from the cut surface, it is possible to further improve reliability (moisture-resistant life), like Example 3.

In this case, when washing is not sufficiently performed after the treatment with the aqueous alkali solution, the residue of the alkali aqueous solution corrodes aluminum, thus exerting an adverse influence on life. However, when treated with an acidic aluminum dihydrogenphosphate aqueous solution after the treatment with the alkali aqueous solution, the effect of neutralizing the residue of the aqueous alkali solution remaining inside is exerted.

Since the aluminum hydrogenphosphate aqueous solution contains aluminum, it exerts a buffer action to dissolution during treating aluminum used as the internal electrode in a film capacitor and also has such a merit that a treatment can be performed without causing excessive dissolution. The concentration of the aluminum hydrogenphosphate aqueous solution is from 3 to 50% by weight, preferably from 5 to 30% by weight, and more preferably from 5 to 20% by weight. When the concentration is more than 50% by weight, the internal electrode (aluminum) of the element is excessively dissolved. Even when washed after the treatment, there arise problems that the aluminum electrode is corroded and the washing time increases because of high residue concentration. When the concentration is less than 3% by weight, aluminum phosphate does not sufficiently adhere on the exposed internal electrode aluminum layer and thus it is impossible to obtain a film sufficient to improve moisture resistance.

While the case where a PML capacitor obtained by continuously forming a resin dielectric layer and an aluminum metallic layer under vacuum was subjected to a treatment was described in the examples, the same effect is obtained even when a multilayered film capacitor of a type of laminating a ready-made resin film (PET, PP, PPS, PEN, etc.) and a metallic layer or stacked metallized ready made resin film, electrically bonding a metallic layer laminated on a pair of opposite surfaces of the laminate to a different terminal electrode alternately, and cutting the laminate to obtain a chip capacitor element is subjected to a treatment.

While the case where an aluminum monohydrogenphosphate aqueous solution and an aluminum dihydrogenphosphate aqueous solution are used as the solution for the treatment in the examples, the same effect can be obtained even when a solution containing any one of phosphoric acids, phosphates and phosphoric esters is used.

### EFFECT OF THE INVENTION

According to the present invention, a film made of aluminum containing phosphoric acid can be formed on a surface of a capacitor element, especially a surface of aluminum of a cut surface by comprising a step of treating a capacitor element with a solution containing at least a phosphoric acid compound, especially a solution containing any one of phosphoric acids, phosphates and phosphoric esters, and more especially a solution containing aluminum hydrogenphosphate, and a step of heating the capacitor element. This film is a film which is excellent in high stability in atmosphere and is also excellent in hydration resistance. Therefore, moisture resistance of the capacitor can be improved by exerting the effect of suppressing hydration of an internal electrode metal (aluminum) caused by permeation of moisture into the capacitor element.

The reaction schemes, which enable formation of a film containing phosphoric acid on a surface of aluminum of the above cut surface by the method of the present invention, are shown below.

aAl³⁺ b[H₃₋ₙPO₄]ⁿ⁻ → [Alₐ [H₃₋ₘPO₄] _{b}] ^{3a-bm} + b (m - n)H⁺

aAl³⁺ + (b + c) H₂O + d [H₃₋ₙPO₄]ⁿ⁻→ [AlₐO_{b} (OH)_{c} (H_{3- m}PO₄)_{d}]⁰ + [2b + c + d(m - n) ]H⁺

By further subjecting the film containing phosphoric acid formed on the surface of aluminum of the cut surface by the above reaction schemes to a heat treatment, more excellent stability and hydration resistance can be imparted.

By forming such a film, a high-reliability capacitor having excellent moisture resistance, impact resistance and contamination from the outside can be provided.

Based on the above operation, the present invention can solve the above-described problems of the prior art and provide a high-reliability small-sized capacitor, which is excellent in all characteristics such as initial electrical characteristics, initial insulation resistance value (initial IR value), moisture-resistant life characteristics and impact resistance, by a simple and easy treating method without impairing size reduction of a capacitor.

## Claims

1. A method for producing a multilayered film capacitor prepared by laminating a dielectric layer and a metallic layer comprising aluminum, **characterized in** comprising a step of treating a capacitor element with a solution containing at least a phosphoric acid compound.

2. The method for producing a multilayered film capacitor according to claim 1, wherein the phosphoric acid compound is any one of phosphoric acids, phosphates and phosphoric esters.

3. The method for producing a multilayered film capacitor according to claim 1 or 2, wherein the phosphoric acid compound is aluminum hydrogenphosphate.

4. The method for producing a multilayered film capacitor according to claim 3, wherein the aluminum hydrogenphosphate is aluminum monohydrogenphosphate (Al₂(HPO₄)₃) or aluminum dihydrogenphosphate (Al (H₂PO₄)₃) .

5. The method for producing a multilayered film capacitor according to any one of claims 1 to 4, which is further **characterized in** comprising a step of heating the capacitor element after the step of treating the capacitor element with the solution containing the phosphoric acid compound.

6. The method for producing a multilayered film capacitor according to claim 5, wherein the maximum temperature of the surface of the capacitor element, during the step of heating, is from 200°C to 280°C.

7. The method for producing a multilayered film capacitor according to any one of claims 1 to 6, which is further **characterized in** comprising a step of treating with an aqueous alkali solution before the step of treating the capacitor element with the solution containing the phosphoric acid compound.

8. The method for producing a multilayered film capacitor according to claim 7, wherein the aqueous alkali solution contains at least one of sodium hydroxide, potassium hydroxide and lithium hydroxide.

9. The method for producing a multilayered film capacitor according to any one of claims 1 to 8, wherein the dielectric layer is formed by depositing a vaporized monomer or oligomer on substrate under the vacuum and curing the monomer or oligomer.
